# DEMANDE DE BREVET EUROPEEN

(11) **EP 1 401 132 A1**
(43) Date de publication de la demande: **24.03.2004**
(21) Numéro de dépôt: 03292290.8
(22) Date de dépôt: 18.09.2003
(51) Int. Cl.: H04J 3/06

(54) **Procédé d'établissement de signaux d'alignement destinés à être utilisés pour l'extraction de containers d'une trame synchrone, bus supportant de tels signaux d'alignement et signaux d'alignement**

(30) Priorité: 18.09.2002 FR 0211574
(71) Demandeur: SAGEM S.A., 75015 Paris (FR)
(72) Inventeur: Lossouarn, Yann, 91300 Massy (FR); Jourdain, Philippe, 22300 Lannion (FR)
(74) Mandataire: Maillet, Alain

(57) **Abrégé**

La présente invention concerne un procédé d'établissement de signaux d'alignement destinés à être utilisés pour l'extraction de containers d'une trame synchrone du type SDH ou SONET qui est caractérisé en ce qu'il consiste à considérer un certain nombre d'états d'une trame dont l'identification peut permettre le repérage des données utiles desdits containers, puis de coder chacun desdits états en un code (W) formant lesdits signaux d'alignement.

Elle concerne également un bus supportant de tels signaux d'alignement ainsi que lesdits signaux d'alignement.

## Description

La présente invention concerne un procédé d'établissement de signaux d'alignement destinés à être utilisés pour l'extraction de containers d'une trame synchrone du type SDH (Synchronous Digital Hierarchy : Hiérarchie numérique synchrone), soit des flux du type SONET (Synchronous Optical Network).

La présente invention concerne également un bus destiné à supporter des signaux d'alignement tels que ceux qui sont établis selon ledit procédé. Elle concerne également lesdits signaux d'alignement.

Alors que le concept SONET a été développé aux Etats-Unis, la hiérarchie SDH est l'objet notamment de la recommandation G.707 de l'UIT-T (Union Internationale des Télécommunications). La suite de la présente description sera relative à la hiérarchie SDH mais, comme les concepts SONET et SDH sont voisins, il est de la portée de l'homme du métier d'extrapoler ce qui sera dit relativement à la hiérarchie SDH au concept SONET.

Un réseau du type à mode de transfert synchrone peut se présenter sous deux topologies physiques distinctes : d'une part, une topologie en point à point dont la topologie logique se présente sous la forme de bus et, d'autre part, une topologie physique en anneau dont la topologie logique est une topologie en étoile ou maillée. Chaque noeud d'un tel réseau est équipé d'un multiplexeur du type insertion/extraction qui est interconnecté, d'une part, à un multiplexeur Est et à un multiplexeur Ouest formant ainsi deux sections et, d'autre part, à des équipements clients notés EC.

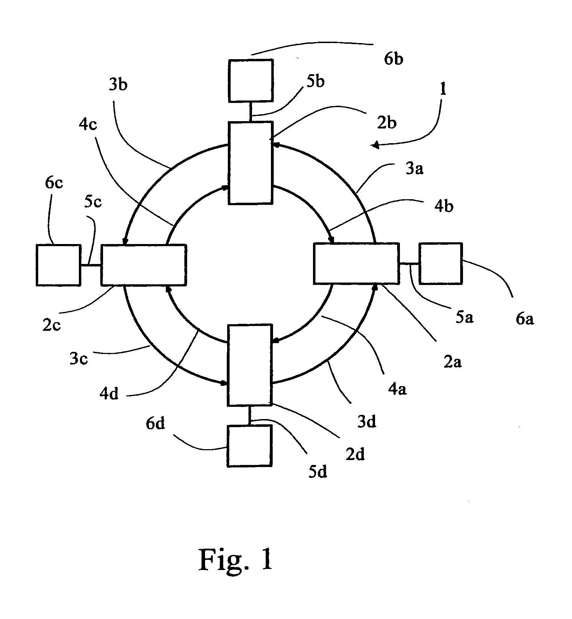

A titre d'exemple, on a représenté à la Fig. 1, un réseau en anneau 1 pourvu de quatre multiplexeurs insertion/extraction 2a à 2d reliés deux à deux par des liens, dits de résultant, 3a à 3d et 4a à 4d sur lesquels les flux de données transitent en tournant respectivement dans le sens inverse des aiguilles d'une montre et dans le sens des aiguilles d'une montre. Chaque multiplexeur insertion/extraction 2a à 2d est également relié, par des liens 5a à 5d, dits d'affluents, à des équipements clients 6a à 6d.

On notera qu'au lieu d'être relié à un équipement client, un multiplexeur pourrait être relié à un autre multiplexeur du même type d'un autre réseau. Un tel multiplexeur est alors dit brasseur.

Lorsqu'il reçoit un flux synchrone d'un de ses deux voisins, un multiplexeur en extrait les données qui sont destinées aux équipements clients auxquels il est connecté et y ajoute les données que lesdits équipements clients veulent transmettre sur le réseau, puis émet, après mise au format synchrone, des flux synchrones vers son autre voisin. Essentiellement pour des raisons de sécurisation, deux boucles sont formées par les multiplexeurs, l'une dans le sens des aiguilles d'une montre, l'autre dans l'autre sens. Le choix, au niveau d'un multiplexeur, d'un arc d'une boucle plutôt que de l'autre arc de l'autre boucle pour la transmission des données vers un autre multiplexeur est réalisé de manière que le circuit suivi par ces données soit le plus court.

Les flux de données reçus des équipements clients ou émis vers les équipements clients sont appelés affluents. Ces affluents peuvent être synchrones ou plésiochrones.

L'avantage du mode de transfert synchrone tel qu'il est spécifié dans la hiérarchie SDH et dans le concept SONET réside dans la structure des trames utilisées qui permettent l'extraction et l'insertion directes de données dans une trame sans qu'il soit nécessaire de la démultiplexer entièrement préalablement.

On va décrire brièvement ci-dessous cette structure mais, pour plus de précisions, on pourra notamment se reporter à la recommandation G707 déjà mentionnée ci-dessus.

Le mode de transfert synchrone est basé sur une technologie de multiplexage à division temporelle. Plus précisément, les données à transmettre sont portées par des affluents qui peuvent être synchrones ou plésiochrones. Au moment de son ajout dans une trame, un affluent est d'abord projeté dans un container dont le type dépend du débit de ses données et auquel sont ensuite ajoutées des données de gestion de conduit sous la forme d'un surdébit POH formant ainsi un container virtuel. Le transport des containers virtuels sur des trames dites trames STM-n (n = 1, 4, 16, 64 ou 256) s'effectue par un multiplexage temporel des différents containers virtuels. Comme on le verra par la suite, ces containers virtuels peuvent "flotter" dans une trame si bien que des pointeurs sont prévus pour pouvoir les repérer au moment notamment de l'extraction d'un affluent d'une trame. Les données de l'affluent sont alors extraites du container virtuel correspondant et les données de gestion de conduit contenues dans le surdébit POH associé sont extraites. On notera que ces données de gestion de conduit concernent la gestion du conduit reliant l'émetteur et le récepteur, d'où le nom du surdébit : POH = Path OverHead.

Plus particulièrement, les trames STM-n sont le résultat du multiplexage de n trames STM-1 dont elles reprennent la structure générale.

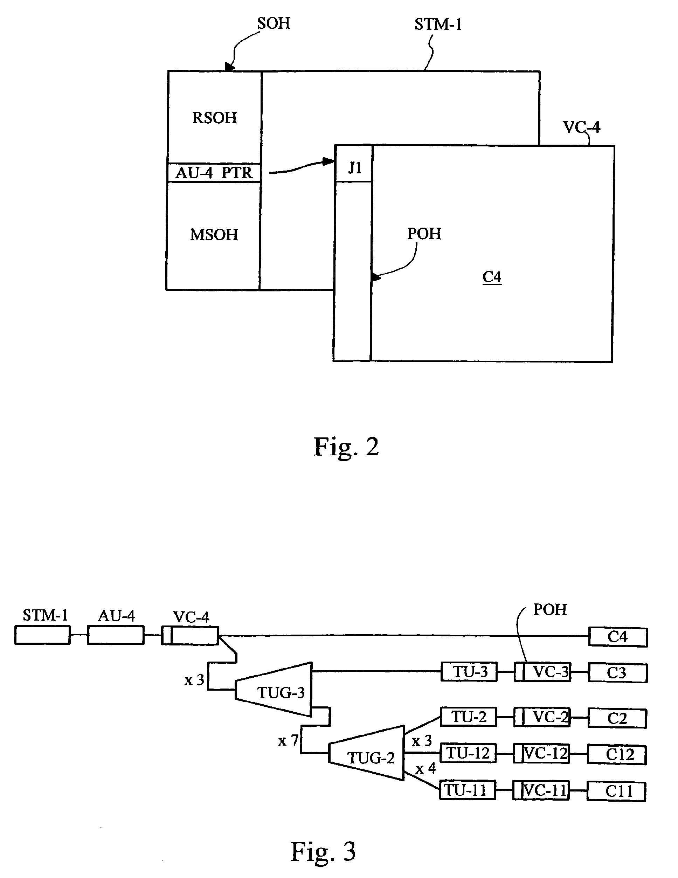

On a représenté à la Fig. 2 une trame STM-1 dont on explique maintenant la structure. Cette trame, nommée STM-1, est constituée d'un ensemble d'octets que l'on peut représenter en un rectangle de 9 lignes et de 270 colonnes. Les neuf premières colonnes de cette trame contiennent le surdébit dit de section (SOH : Section OverHead) contenant lui-même des informations de service associées à la gestion de la section de la ligne, c'est-à-dire de la partie de ligne entre deux multiplexeurs synchrones. Plus exactement, le surdébit SOH est divisé en deux parties : le surdébit RSOH contenant les informations de gestion des sections de régénération et le surdébit MSOH contenant les informations de gestion des sections de multiplexage. Parmi les octets contenus dans le surdébit de section SOH, les premiers octets forment entre eux un mot de verrouillage de trame et un octet, dit C1 ou J0, sert d'octet de synchronisation de trame.

La charge utile de la trame contient quant à elle des containers virtuels qui sont arrangés hiérarchiquement. Plus précisément, elle contient un ou plusieurs containers virtuels d'ordre supérieur VC-4 ou VC-3, lesquels contiennent des containers virtuels d'ordre inférieur tels que les containers VC-3, VC-2, VC-12 ou VC-11 et, ce, conformément à la recommandation G.707 mentionnée ci-dessus.

Plus précisément, la charge utile d'une trame STM-1 contient une unité administrative dite AU-4 qui est l'association d'un container virtuel dit VC-4 et d'un pointeur appelé AU-4 PTR qui se trouve à la quatrième ligne du surdébit de section SOH de la trame. Le container virtuel VC-4 occupe 9 lignes de 261 octets et est lui-aussi constitué, d'une part, d'un surdébit de conduit (Path OverHead) contenant les informations de service de conduit (c'est-à-dire du "conduit" de bout en bout) associées à ce container VC-4 et sa charge utile (payload) généralement appelée container C-4. La position du container virtuel VC-4 à l'intérieur d'une trame STM-1 n'est pas constante, d'où la nécessité du pointeur AU-4 PTR pointant le premier octet, appelé J1, du container virtuel VC-4.

Comme cela est représenté à la Fig. 3, un container C-4 peut être le résultat d'une projection directe des données à transmettre mais il peut également être le résultat d'un multiplexage de trois groupes d'unités affluents TUG-3. Chaque groupe TUG-3 peut être une unité affluent TU-3, association d'un pointeur (octets H1, H2 et H3) et d'un container virtuel VC-3. En d'autres termes, un container virtuel VC-3 peut "flotter" dans l'unité affluent TU-3 associée.

Dans un premier cas, ce container virtuel VC-3 est alors quant à lui le résultat de l'association, d'une part, d'un container C-3 dans lequel sont directement projetées les données à transmettre et, d'autre part, d'un surdébit POH de gestion du conduit portant lesdites données.

Dans un second cas, chaque groupe d'unités affluents TUG-3 peut également être le résultat d'un multiplexage de sept groupes d'unités affluents TUG-2, lesquels peuvent être soit une unité affluent TU-2 provenant d'un container virtuel VC-2 et donc d'un container C-2, soit le résultat du multiplexage de trois unités affluents TU-12 provenant chacune d'un container virtuel VC-12 et donc d'un container C-12, soit encore le résultat du multiplexage de quatre unités affluents TU-11 provenant chacune d'un container virtuel VC-11 et donc d'un container C-11. On rappelle ici qu'un container virtuel est l'association d'un container et d'un surdébit POH contenant des informations relatives au conduit de transmission de ce container et qu'une unité affluent est l'association d'un container virtuel et d'un pointeur donnant sa position dans l'unité.

Les containers virtuels VC-4 et VC-3 sont dits d'ordre supérieur du fait qu'ils n'ont pas besoin d'être encapsulés dans d'autres containers virtuels pour être présents dans une trame STM-n alors qu'à contrario, les autres containers sont dits d'ordre inférieur. On notera l'ambivalence à cet égard du container virtuel VC-3 qui peut être d'ordre supérieur ou d'ordre inférieur s'il est inclus dans un container virtuel VC-4.

Le débit plésiochrone porté par un container C4 est de 140 Mb/s. Le débit plésiochrone porté par un container C3 peut être de 34 Mb/s ou de 45 Mb/s alors qu'il est de 6 Mb/s pour un container C2, de 2 Mbit/s pour un container C12 et de 1,5 Mbits/s pour un container C11.

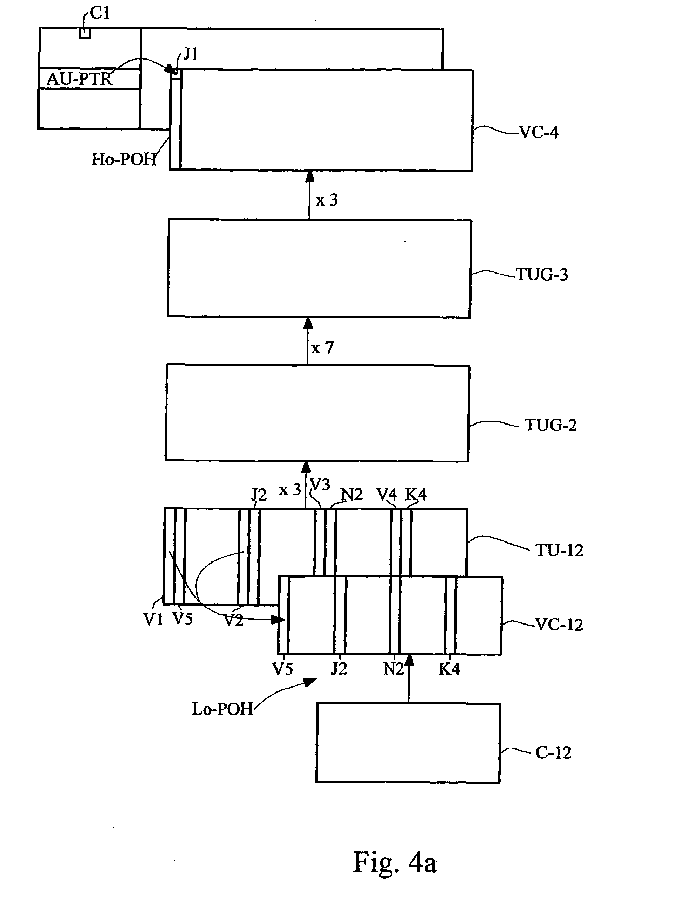

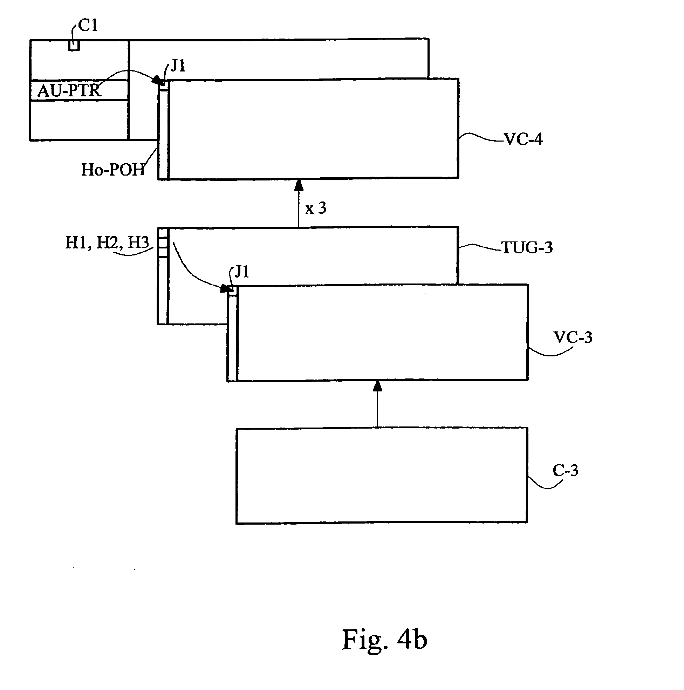

Si l'on considère une unité affluent TU-12 représentée à la Fig. 4, elle est constituée d'un container virtuel VC-12 dont la position dans l'unité affluent TU-12 est donnée par un pointeur. Plus précisément, un container virtuel VC-12 est le résultat de la projection d'un container C-12 et d'un surdébit de gestion du conduit Lo-POH. Le container C-12 et le surdébit associé sont répartis sur quatre trames STM-1 successives. Le surdébit POH comporte quatre octets dont notamment un octet V5 servant au traitement des erreurs de transmission du container virtuel et un octet J2 servant de trace du conduit du container correspondant. L'unité TU-12 est donc l'association d'un container virtuel VC-12 et d'un pointeur qui lui est constitué de quatre octets V1 à V4 (dans les faits seuls les octets V1 et V2 sont utilisés) répartis également sur quatre trames STM-1 successives. On notera que l'apparition de l'octet V1 qui est aussi le premier octet de l'unité affluent TU-12, permet d'identifier la première trame d'une multitrame.

Trois unités affluents TU-12 sont multiplexées pour former un groupe d'unités affluents TUG-2. Puis, sept groupes d'unités affluents TUG-12 sont multiplexées pour former un groupe d'unités affluents TUG-3 qui sont par trois multiplexées de manière à former un container d'ordre supérieur VC-4. Un pointeur AU-PTR est adjoint à ce container d'ordre supérieur VC-4 de manière à former une unité administrative AU-4 laquelle est encapsulée dans la trame STM-1.

A la Fig. 4b, on voit un container d'ordre supérieur VC-4 dans lequel sont multiplexés trois groupes d'unités affluents TUG-3 (qui sont en l'occurrence aussi des unités affluents TU-3). Chaque groupe d'unités affluents TUG-3 comporte un surdébit dans lequel se trouve un pointeur constitué des trois octets dits H1, H2 et H3 et pointant sur le premier octet J1 d'un container virtuel VC-3, lequel est constitué d'un container C-3 et d'un surdébit de conduit POH.

Dans un réseau synchrone, un multiplexeur insertion/extraction est donc installé à chaque noeud et a pour fonction essentielle de repérer les différents containers virtuels qui sont contenus dans la trame entrante, de déterminer parmi ceux-ci ceux dont les données sont destinées aux équipements clients associés à ce noeud afin de les extraire de la trame et de les commuter vers les affluents correspondants, d'ajouter dans la trame de nouveaux containers virtuels dans lesquels ont été projetées les données des affluents issus des équipements clients à transmettre vers d'autres noeuds du réseau, puis d'émettre chaque trame résultante vers le noeud suivant du réseau.

A la réception d'une trame synchrone STM-n par un noeud, sa phase est quelconque par rapport à l'horloge de référence du noeud. En conséquence, celui-ci va opérer un alignement des containers virtuels transportés par la trame en les plaçant dans une trame générée localement, de structure identique à la trame synchrone entrante mais dont les valeurs des pointeurs ont été recalculées pour tenir compte de la différence relative de phase. Cette opération étant effectuée, les différents octets de la trame peuvent être lus et traités. Il en est ainsi des pointeurs vers des containers virtuels.

Les containers virtuels destinés à être délivrés en tant qu'affluents, sont placés dans une pseudo-trame de structure identique à une trame synchrone STM-n mais qui n'est a priori pas renseignée quant à son surdébit SOH et quant aux surdébits POH des containers virtuels qu'elle contient.

Pour l'exploitation de cette pseudo-trame, notamment pour en extraire les containers qu'elle contient, il est intéressant de disposer de signaux dits signaux d'alignement qui permettent le repérage des différentes données qu'elle contient. Ces signaux d'alignement pourraient être les suivants : un signal pour le repérage temporel de la trame, par exemple l'octet C1 présent dans le surdébit de section SOH de la trame ; un signal pour le repérage du ou des containers virtuels de haut niveau, par exemple l'octet J1 ; un signal d'indication du début de la multitrame (on rappelle que les containers virtuels VC-12 sont répartis sur quatre trames consécutives que l'on appelle une multitrame) ; un signal de repérage d'un container virtuel de bas niveau, par exemple l'octet V5 des containers virtuels VC-12 ou l'octet J1 des containers virtuels VC-3.

Afin de tenir compte des justifications qui peuvent être positives ou négatives, sont ajoutés, à ces signaux, un signal d'enveloppe de la charge utile du ou des containers de haut niveau et un signal d'enveloppe de la charge utile des containers de bas niveau. En effet, lorsque le débit de l'affluent est inférieur au débit nominal, la capacité de la charge utile du container virtuel considéré n'est pas utilisée en totalité et des octets de bourrage seront insérés ; c'est ce que l'on appelle la justification positive où l'enveloppe du container virtuel considéré est plus petite que normalement. A l'inverse, lorsque le débit de l'affluent est supérieur au débit nominal, la capacité de la charge utile du container virtuel considéré n'est plus suffisante et des octets sont alors insérés en des places prédéfinies, en l'occurrence les octets H3 du surdébit SOH de la trame ; c'est ce que l'on appelle la justification négative.

Ces signaux d'alignement ainsi que les données de la pseudo-trame et le signal d'horloge qui les accompagne sont fournis à une unité d'extraction de containers qui n'est pas décrite ici mais dont l'homme du métier comprendra qu'elle exploite ces différents signaux dans le but d'extraire les containers que la pseudo-trame contient.

Le problème que cherche à résoudre la présente invention est celui du nombre trop important de fils nécessaires au transport de ces signaux d'alignement. Si l'on considère les signaux d'alignement qui sont mentionnés ci-dessus, ce nombre est de cinq.

Le but de la présente invention est de proposer des moyens qui permettent de diminuer ce nombre sans pour cela amputer l'information à transmettre.

Pour ce faire, un procédé d'établissement de signaux d'alignement destinés à être utilisés pour l'extraction de containers d'une trame synchrone du type SDH ou SONET est caractérisé en ce qu'il consiste à considérer un certain nombre d'états d'une trame dont l'identification peut permettre le repérage des données utiles desdits containers, puis de coder chacun desdits états en un code formant lesdits signaux d'alignement.

Avantageusement, lesdits états incluent au moins l'un des états suivants :
un état (I) où est présent un signal prédéfini de référence temporelle de la trame, tel que l'octet (C1) du surdébit de section (SOH) de ladite trame,
un état (II) où est présent le surdébit de section (SOH) de ladite trame,
un état (III) de la présence simultanée, d'une part, de la charge utile d'un container d'ordre inférieur, et d'autre part, de la charge utile d'un container d'ordre supérieur,
un état (IV) de la présence de la charge utile d'un container d'ordre supérieur,
un état (V) de la présence d'un octet spécifique du surdébit de conduit d'un container virtuel d'ordre inférieur, tel que l'octet (J1),
un état (VI) de la présence d'un signal d'indication du premier octet du pointeur vers un container virtuel d'ordre inférieur lorsque celui-ci est réparti sur plusieurs trames d'une multitrame, tel que l'octet (V1), et
un état (VII) de la présence d'un signal d'indication d'un octet spécifique d'un container virtuel d'ordre inférieur, tel que l'octet (V5) dans le cas d'un container virtuel (VC-12) ou l'octet (J1) dans le cas d'un container virtuel (VC-3).

Selon un mode de réalisation de l'invention, lesdits états sont obtenus à partir des signaux suivants délivrés par une unité de traitement (110) :
un signal (C1J1) est actif lorsque, d'une part, un octet de synchronisation, tel que l'octet (C1), est présent dans la trame et, d'autre part, le premier octet d'un container d'ordre supérieur (VC-4), en l'occurrence l'octet (J1), est présent dans la trame ;
un signal (VC4SPE) actif en présence de la charge utile d'un container d'ordre supérieur (VC-4) ;
un signal (MF) qui permet de repérer la première trame d'une multitrame, tel que l'octet (V1) d'une unité affluent d'ordre inférieur (TU-12) ;
un signal (LOVCSPE) actif en présence de la charge utile d'un container d'ordre inférieur, (VC-12) ou (VC-3) ;
un signal (LOVCFIRST) actif en présence du premier octet d'un container virtuel d'ordre inférieur, tel que l'octet (V5) d'un container (VC-12) ou l'octet (J1) d'un container (VC-3).

La présente invention concerne également un bus d'un circuit de traitement de trames synchrones, telles que des trames SDH ou des trames SONET dans lesquelles sont multiplexés des containers, ledit bus étant prévu pour supporter des signaux d'alignement qui sont alors constitués de mots binaires représentatifs d'un certain nombre d'états d'une trame et dont l'identification peut permettre le repérage des données utiles desdits containers contenus dans ladite trame.

Enfin, la présente invention concerne également des signaux d'alignement délivrés par un circuit de traitement de trames synchrones, telles que des trames SDH ou des trames SONET dans lesquelles sont multiplexés des containers, lesdits signaux étant caractérisés en ce qu'ils sont constitués de mots binaires représentatifs d'un certain nombre d'états d'une trame et dont l'identification peut permettre le repérage des données utiles desdits containers contenus dans ladite trame.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 est un schéma simplifié d'un réseau en anneau qui peut mettre en oeuvre la technique SDH ou SONET,
La Fig. 2 montre la structure d'une trame STM-1 conforme à la technique SDH,
La Fig. 3 montre la hiérarchie de multiplexage des containers dans une trame STM-1,
Les Figs. 4a et 4b sont des schémas montrant respectivement l'encapsulation de containers C-12 et l'encapsulation de containers C-3 dans une trame STM-1,
La Fig. 5 montre les différents signaux d'alignement utilisés par un mode de réalisation de la présente invention ainsi que les états de la trame correspondants, et
La Fig. 6 est un schéma synoptique d'un circuit de traitement de trames équipé d'un bus selon l'invention supportant des signaux d'alignement selon la présente invention.

Le principe de la présente invention est d'abord de considérer un certain nombre d'états d'une trame dont l'identification peut permettre le repérage des données utiles de la trame, puis de coder chacun de ces états en un mot binaire W qui est alors délivré, par exemple à une unité d'extraction de containers. Des signaux, dits signaux d'alignement, objet également de la présente invention, constituent les mots binaires W représentatifs des états de la trame considérés. Enfin, ces signaux d'alignement caractéristiques de l'invention sont délivrés sur un bus qui les supporte et qui est également l'objet de la présente invention.

Les états en question peuvent être la présence à un moment considéré de signaux spécifiques, tels que des octets C1, J1, V1, etc. ou d'éléments spécifiques, tels qu'un container virtuel d'ordre supérieur VC-4, un container virtuel d'ordre inférieur, par exemple un container virtuel VC-12 ou un container virtuel VC-3, etc. Or, il résulte du fait que la présence de certains éléments ou de certains signaux est incompatible avec d'autres, que le nombre des états nécessaires au repérage des données utiles est inférieur au nombre d'états que l'on pourrait former potentiellement avec tous ces signaux. En conséquence, les codes formés pour les caractériser comportent un nombre relativement faible de bits et le nombre de fils pour les transmettre en parallèle est aussi relativement faible.

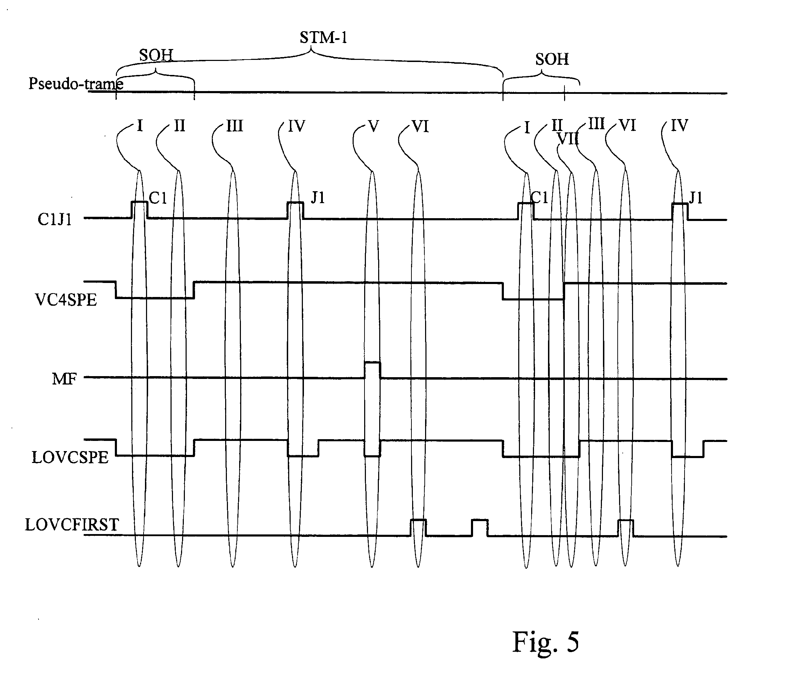

On va donner un exemple de réalisation de la présente invention en relation avec la Fig. 5 dans le cas du repérage de containers virtuels d'ordre inférieur, tels que des containers virtuels VC-12 ou VC-3 dans une trame STM-1. On a considéré sept états différents référencés I à VII. Dans le diagramme de la Fig. 5, les différentes lignes portent une référence du signal qu'elle représente.

Ainsi, le signal C1J1 est actif (par exemple il prend alors la valeur 1) lorsque, d'une part, un octet de synchronisation, tel que l'octet C1, est présent dans la trame et, d'autre part, le premier octet d'un container d'ordre supérieur VC-4, en l'occurrence l'octet J1, est présent dans la trame ;

Le signal VC4SPE (VC4 Synchronous Payload Envelope : enveloppe de la charge utile synchrone d'un VC4) est actif (par exemple à 1) en présence de la charge utile d'un container d'ordre supérieur VC-4 ;

Le signal MF (Multi-Frame : signal de multi-trame) est un signal qui permet de repérer la première trame d'une multitrame, généralement l'octet V1 d'une unité affluent d'ordre inférieur TU-12 ;

Le signal LOVCSPE (Low Virtual Container Synchronous Payload Envelope : enveloppe de la charge utile d'un container d'ordre inférieur) est actif en présence de la charge utile d'un container d'ordre inférieur, VC-12 ou VC-3 ;

Le signal LOVCFIRST (Low Virtual Container First : Premier *octet* d'un container virtuel d'ordre inférieur) est actif en présence du premier octet d'un container virtuel d'ordre inférieur. Il peut s'agir de l'octet V5 d'un container VC-12 mais aussi de l'octet J1 d'un container VC-3 considéré ici comme un container d'ordre inférieur.

D'après ce diagramme, on peut constater que l'état I est la présence d'un signal prédéfini de référence temporelle de la trame, en l'occurrence, à titre d'exemple, l'octet C1 qui est, on le rappelle, un octet du surdébit SOH de la trame.

L'état II est celui de la présence du surdébit de section SOH, en dehors de la présence du signal prédéfini de référence temporelle.

L'état III est celui de la présence simultanée, d'une part, de la charge utile d'un container d'ordre inférieur, tel qu'un container virtuel VC-12 ou VC-3, pendant laquelle le signal LOVCSPE est haut et, d'autre part, de la charge utile d'un container d'ordre supérieur, en l'occurrence un container virtuel VC-4 pendant laquelle le signal VC4SPE est également haut.

L'état IV est celui de la présence de la charge utile d'un container d'ordre supérieur, en l'occurrence un container virtuel VC-4 pendant laquelle le signal VC4SPE est également haut en l'absence de la charge utile d'un container virtuel d'ordre inférieur. Cet état est présent lors des pointeurs (par exemple les octets V1, V2) vers des containers virtuels d'ordre inférieur, lors du surdébit POH des containers virtuels d'ordre inférieur, mais aussi lors de la justification positive où le container virtuel VC-4 comporte des données de bourrage. Il est également présent lorsque la trame ne comporte qu'un ou des containers virtuels d'ordre supérieur VC-4 chargé par des containers C-4 et non des containers d'ordre inférieur.

L'état V est celui de la présence d'un octet spécifique du surdébit POH d'un container d'ordre supérieur VC-4, tel que le premier octet de ce surdébit, par exemple l'octet J1. Cet octet spécifique a nécessairement lieu en présence de la charge utile d'un container d'ordre supérieur, c'est-à-dire, en l'occurrence, lorsque le signal VC4SPE est haut.

L'état VI est celui de la présence du signal d'indication du premier octet du pointeur vers un container virtuel d'ordre inférieur (en l'occurrence l'octet V1 qui, on le rappelle n'est présent qu'à la première trame d'une multitrame). On remarquera qu'il est nécessairement associé à la présence de la charge utile d'un container d'ordre supérieur (le signal VC4SPE est haut) ainsi qu'à la présence de la charge utile d'un container d'ordre inférieur (le signal LOVCSPE est également haut).

L'état VII est celui de la présence du signal d'indication du premier octet d'un container virtuel d'ordre inférieur, VC-12 ou VC-3, en l'occurrence l'octet V5 pour des containers virtuels VC-12 ou l'octet J1 d'un container virtuel VC-3. On remarquera qu'il est nécessairement associé à la présence de la charge utile d'un container d'ordre supérieur (le signal VC4SPE est haut) ainsi qu'à la présence de la charge utile d'un container d'ordre inférieur (le signal LOVCSPE est également haut).

Ces états sont utilisés de la manière suivante. L'état I permet de se synchroniser sur la pseudo-trame.

L'état II permet de faciliter le cadrage du surdébit SOH de la trame. On notera que ce cadrage pourrait être obtenu à partir de l'état 1 en effectuant des comptages d'octets, mais cela nécessiterait des traitements que la prise en compte de l'état I permet d'éviter.

L'état III permet le cadrage des containers d'ordre supérieur VC-4, en donnant ces limites. Il permet de tenir compte des justifications, notamment positives.

L'état IV permet de discriminer les trames dans lesquelles les containers d'ordre supérieur VC-4 contiennent des containers d'ordre inférieur VC-3 ou VC-12 des trames dans lesquelles les containers d'ordre supérieur VC-4 contiennent des containers C-4 et donc pas de containers d'ordre inférieur.

L'état V permet de déterminer le premier octet du container d'ordre supérieur V C-4.

L'état VI permet de déterminer la première trame d'une multitrame. Ceci est notamment rendu nécessaire pour l'extraction des containers d'ordre inférieur VC-12 dans la mesure où ceux-ci sont répartis sur toute une multitrame.

L'état VII permet de déterminer la position du premier octet d'un container d'ordre inférieur VC-12.

Les états ainsi sélectionnés sont codés par exemple en un mot de 3 bits. Par exemple, ils le sont de la manière donnée dans le tableau ci-dessous.

| | | | |
|---|---|---|---|
| Etat I | 010 | Etat II | 001 |
| Etat III | 011 | Etat IV | 100 |
| Etat V | 110 | Etat VI | 111 |
| Etat VII | 101 | Autres | 000 |

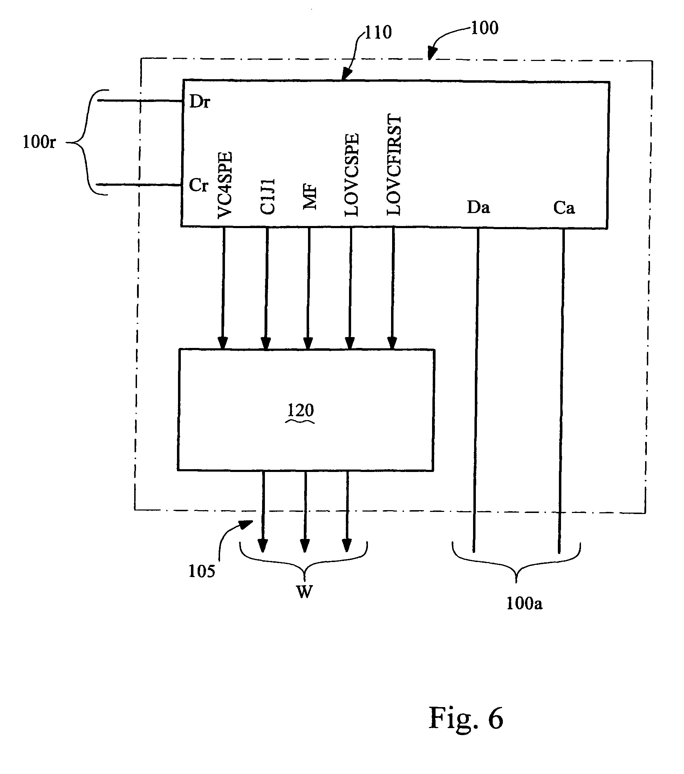

On a représenté à la Fig. 6 un circuit 100 de traitement de trames qui est équipé d'un bus 105 selon la présente invention.

Le circuit 100 comprend une unité de traitement 110 qui est prévue pour recevoir d'un résultant 100r et émettre sur ce résultant 100r des signaux de données Dr sous la forme de trames synchrones accompagnés de leur signaux d'horloge Cr et pour recevoir d'un affluent 100a et émettre sur cet affluent 100a des signaux de données Da sous la forme de pseuso-trames synchrones accompagnés de leurs signaux d'horloge Ca. La fonction essentielle de l'unité de traitement 110 est d'aligner les containers de la trame sur le résultant 100r en re-calculant la valeur des pointeurs associés et en gérant les justifications positives ou négatives nécessaires. Elle est aussi de traiter les informations contenues dans les différents octets de la trame sur le résultant 100r et relatives à la gestion des éventuelles erreurs, de la qualité de services, etc.

Tous les traitements effectués par l'unité de traitement 110 l'amènent à manipuler un certain nombre de signaux qu'elle peut délivrer. En l'occurrence, selon un mode de réalisation de la présente invention, ces signaux sont les suivants :
Le signal VC4SPE actif en présence de la charge utile d'un container d'ordre supérieur VC-4 ;
Le signal C1J1 actif lorsque soit un octet de synchronisation, tel que l'octet C1, est présent dans la trame et, soit le premier octet d'un container d'ordre supérieur VC-4, en l'occurrence l'octet J1, est présent dans la trame ;
Le signal MF de repérage de la première trame d'une multitrame ;
Le signal LOVCSPE actif en présence de la charge utile d'un container d'ordre inférieur, VC-12 ou VC-3 ;
Le signal LOVCFIRST actif en présence du premier octet d'un container virtuel d'ordre inférieur.

Ces cinq signaux sont fournis à un codeur 120 qui délivre alors un mot binaire W sur le bus 105. Le bus 105 est donc prévu pour supporter des codes représentatifs des états I à VII ci-dessus.

Le codeur 120 fonctionne selon la table de vérité qui suit dans laquelle le mot We est la concaténation des signaux MF, VC4SPE, C1J1, LOVCSPE et LOVCFIRST, le mot binaire W est celui présent sur le bus 105 et l'état correspond à celui qui est donné dans le tableau ci-dessous. La valeur X de l'état correspond à un état qui ne peut pas exister.

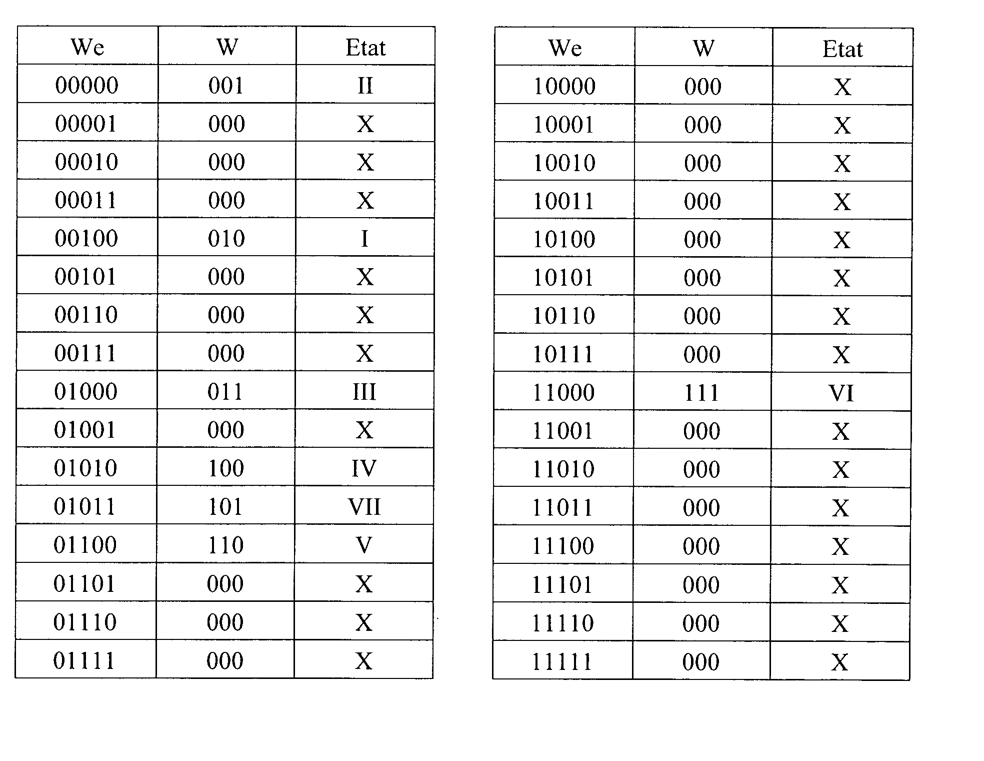

## Revendications

1. Procédé d'établissement de signaux d'alignement destinés à être utilisés pour l'extraction de containers d'une trame synchrone du type SDH ou SONET, **caractérisé en ce qu'**il consiste à considérer un certain nombre d'états d'une trame dont l'identification peut permettre le repérage des données utiles desdits containers, puis de coder chacun desdits états en un code (W) formant lesdits signaux d'alignement.

2. Procédé d'établissement de signaux d'alignement selon la revendication 1, **caractérisé en ce que** lesdits états incluent au moins l'un des états suivants :
un état (I) où est présent un signal prédéfini de référence temporelle de la trame, tel que l'octet (C1) du surdébit de section (SOH) de ladite trame,
un état (II) où est présent le surdébit de section (SOH) de ladite trame,
un état (III) de la présence simultanée, d'une part, de la charge utile d'un container d'ordre inférieur, et d'autre part, de la charge utile d'un container d'ordre supérieur,
un état (IV) de la présence de la charge utile d'un container d'ordre supérieur,
un état (V) de la présence d'un octet spécifique du surdébit de conduit d'un container virtuel d'ordre inférieur, tel que l'octet (J1),
un état (VI) de la présence d'un signal d'indication du premier octet du pointeur vers un container virtuel d'ordre inférieur lorsque celui-ci est réparti sur plusieurs trames d'une multitrame, tel que l'octet (V1), et
un état (VII) de la présence d'un signal d'indication d'un octet spécifique d'un container virtuel d'ordre inférieur, tel que l'octet (V5) dans le cas d'un container virtuel (VC-12) ou l'octet (J1) dans le cas d'un container virtuel (VC-3).

3. Procédé d'établissement de signaux d'alignement selon la revendication 2, **caractérisé en ce que** lesdits états (I à VII) sont codés de la manière donnée dans le tableau suivant :
| | | | |
|---|---|---|---|
| Etat I | 010 | Etat II | 001 |
| Etat III | 011 | Etat IV | 100 |
| Etat V | 110 | Etat VI | 111 |
| Etat VII | 101 | Autres | 000 |

4. Procédé d'établissement de signaux d'alignement selon la revendication 2 ou 3, **caractérisé en ce que** lesdits états (I à VII) sont obtenus à partir des signaux délivrés par une unité de traitement (110) :
un signal (C1J1) est actif lorsque, d'une part, un octet de synchronisation, tel que l'octet (C1), est présent dans la trame et, d'autre part, le premier octet d'un container d'ordre supérieur (VC-4), en l'occurrence l'octet (J1), est présent dans la trame ;
un signal (VC4SPE) actif en présence de la charge utile d'un container d'ordre supérieur (VC-4) ;
un signal (MF) qui permet de repérer la première trame d'une multitrame, tel que l'octet (V1) d'une unité affluent d'ordre inférieur (TU-12) ;
un signal (LOVCSPE) actif en présence de la charge utile d'un container d'ordre inférieur, (VC-12) ou (VC-3) ;
un signal (LOVCFIRST) actif en présence du premier octet d'un container virtuel d'ordre inférieur, tel que l'octet (V5) d'un container (VC-12) ou l'octet (J1) d'un container (VC-3).

5. Procédé d'établissement de signaux d'alignement selon la revendication 4, **caractérisé en ce que** lesdits codes sont engendrés selon la table de vérité suivante dans laquelle le mot binaire (We) est la concaténation des signaux (MF, VC4SPE, C1J1, LOVCSPE et LOVCFIRST), et la valeur (X) de l'état correspond à un état qui ne peut pas exister :

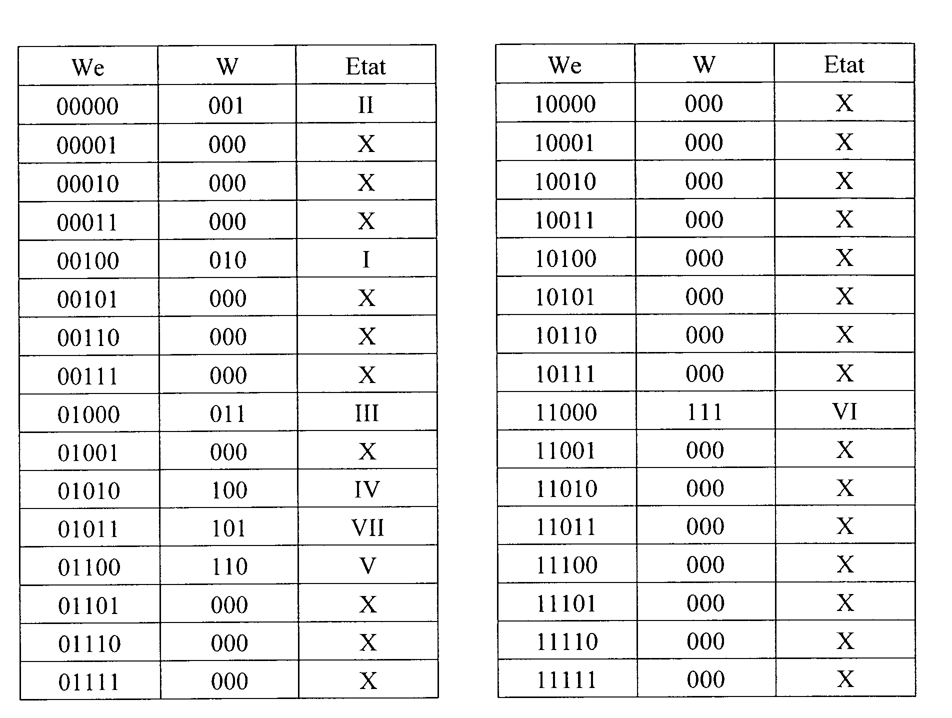

6. Bus d'un circuit de traitement de trames synchrones, telles que des trames SDH ou des trames SONET dans lesquelles sont multiplexés des containers, ledit bus étant prévu pour supporter des signaux d'alignement, **caractérisé en ce que** lesdits signaux d'alignement sont constitués de mots binaires représentatifs d'un certain nombre d'états d'une trame et dont l'identification peut permettre le repérage des données utiles desdits containers contenus dans ladite trame.

7. Bus selon la revendication 6, **caractérisé en ce que** lesdits états incluent au moins l'un des états suivants :
un état (I) où est présent un signal prédéfini de référence temporelle de la trame, tel que l'octet (C1) du surdébit de section (SOH) de ladite trame,
un état (II) où est présent le surdébit de section (SOH) de ladite trame,
un état (III) de la présence simultanée, d'une part, de la charge utile d'un container d'ordre inférieur, et d'autre part, de la charge utile d'un container d'ordre supérieur,
un état (IV) de la présence de la charge utile d'un container d'ordre supérieur,
un état (V) de la présence d'un octet spécifique du surdébit de conduit d'un container virtuel d'ordre inférieur, tel que l'octet (J1),
un état (VI) de la présence d'un signal d'indication du premier octet du pointeur vers un container virtuel d'ordre inférieur lorsque celui-ci est réparti sur plusieurs trames d'une multitrame, tel que l'octet (V1), et
un état (VII) de la présence d'un signal d'indication d'un octet spécifique d'un container virtuel d'ordre inférieur, tel que l'octet (V5) dans le cas d'un container virtuel (VC-12) ou l'octet (J1) dans le cas d'un container virtuel (VC-3).

8. Bus selon la revendication 7, **caractérisé en ce que** lesdits états (I à VII) sont codés de la manière donnée dans le tableau suivant :
| | | | |
|---|---|---|---|
| Etat I | 010 | Etat II | 001 |
| Etat III | 011 | Etat IV | 100 |
| Etat V | 110 | Etat VI | 111 |
| Etat VII | 101 | Autres | 000 |

9. Bus selon la revendication 7 ou 8, **caractérisé en ce que** lesdits états (I à VII) sont obtenus à partir des signaux délivrés par une unité de traitement (110) :
un signal (C1J1) est actif lorsque, d'une part, un octet de synchronisation, tel que l'octet (C1), est présent dans la trame et, d'autre part, le premier octet d'un container d'ordre supérieur (VC-4), en l'occurrence l'octet (J1), est présent dans la trame ;
un signal (VC4SPE) actif en présence de la charge utile d'un container d'ordre supérieur (VC-4) ;
un signal (MF) qui permet de repérer la première trame d'une multitrame, tel que l'octet (V1) d'une unité affluent d'ordre inférieur (TU-12) ;
un signal (LOVCSPE) actif en présence de la charge utile d'un container d'ordre inférieur, (VC-12) ou (VC-3) ;
un signal (LOVCFIRST) actif en présence du premier octet d'un container virtuel d'ordre inférieur, tel que l'octet (V5) d'un container (VC-12) ou l'octet (J1) d'un container (VC-3).

10. Bus selon la revendication 9, **caractérisé en ce que** lesdits codes sont engendrés selon la table de vérité suivante dans laquelle le mot binaire (We) est la concaténation des signaux (MF, VC4SPE, C1J1, LOVCSPE et LOVCFIRST), et la valeur (X) de l'état correspond à un état qui ne peut pas exister :

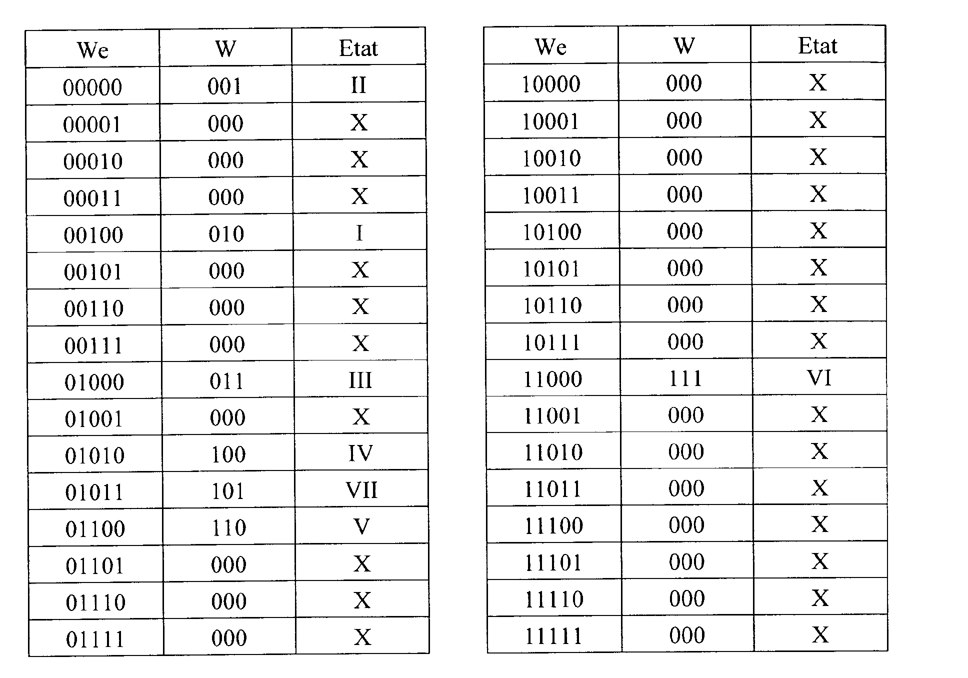

11. Signaux d'alignement délivrés par un circuit de traitement de trames synchrones, telles que des trames SDH ou des trames SONET dans lesquelles sont multiplexés des containers, **caractérisés en ce que** lesdits signaux d'alignement sont constitués de mots binaires représentatifs d'un certain nombre d'états d'une trame et dont l'identification peut permettre le repérage des données utiles desdits containers contenus dans ladite trame.

12. Signaux d'alignement selon la revendication 11, **caractérisés en ce que** lesdits états incluent au moins l'un des états suivants :
un état (I) où est présent un signal prédéfini de référence temporelle de la trame, tel que l'octet (C1) du surdébit de section SOH de ladite trame,
un état (II) où est présent le surdébit de section SOH de ladite trame,
un état (III) de la présence simultanée, d'une part, de la charge utile d'un container d'ordre inférieur, et d'autre part, de la charge utile d'un container d'ordre supérieur,
un état (IV) de la présence de la charge utile d'un container d'ordre supérieur,
un état (V) de la présence d'un octet spécifique du surdébit de conduit d'un container virtuel d'ordre inférieur, tel que l'octet (J1),
un état (VI) de la présence d'un signal d'indication du premier octet du pointeur vers un container virtuel d'ordre inférieur lorsque celui-ci est réparti sur plusieurs trames d'une multitrame, tel que l'octet (V1), et
un état (VII) de la présence d'un signal d'indication d'un octet spécifique d'un container virtuel d'ordre inférieur, tel que l'octet (V5) dans le cas d'un container virtuel (VC-12) ou l'octet (J1) dans le cas d'un container virtuel (VC-3).

13. Signaux d'alignement selon la revendication 12, **caractérisés en ce que** lesdits états (I à VII) sont codés de la manière donnée dans le tableau suivant :
| | | | |
|---|---|---|---|
| Etat I | 010 | Etat II | 001 |
| Etat III | 011 | Etat IV | 100 |
| Etat V | 110 | Etat VI | 111 |
| Etat VII | 101 | Autres | 000 |

14. Signaux d'alignement selon la revendication 12 ou 13, **caractérisés en ce que** lesdits états (I à VII) sont obtenus à partir des signaux délivrés par une unité de traitement (110) :
un signal (C1J1) est actif lorsque, d'une part, un octet de synchronisation, tel que l'octet (C1), est présent dans la trame et, d'autre part, le premier octet d'un container d'ordre supérieur (VC-4), en l'occurrence l'octet (J1), est présent dans la trame ;
un signal (VC4SPE) actif en présence de la charge utile d'un container d'ordre supérieur (VC-4) ;
un signal (MF) qui permet de repérer la première trame d'une multitrame, tel que l'octet (V1) d'une unité affluent d'ordre inférieur (TU-12) ;
un signal (LOVCSPE) actif en présence de la charge utile d'un container d'ordre inférieur, (VC-12) ou (VC-3);
un signal (LOVCFIRST) actif en présence du premier octet d'un container virtuel d'ordre inférieur, tel que l'octet (V5) d'un container (VC-12) ou l'octet (J1) d'un container (VC-3).

15. Signaux d'alignement selon la revendication 14, **caractérisés en ce que** lesdits codes sont engendrés selon la table de vérité suivante dans laquelle le mot binaire (We) est la concaténation des signaux (MF, VC4SPE, C1J1, LOVCSPE et LOVCFIRST) et la valeur (X) de l'état correspond à un état qui ne peut pas exister :
